# FASCICULE DE BREVET EUROPEEN

(11) **EP 1 809 153 B1**
(45) Date de publication et mention de la délivrance du brevet: **11.01.2017**
(21) Numéro de dépôt: 05817201.6
(22) Date de dépôt: 08.11.2005
(51) Int. Cl.: A47J 37/06, A21B 5/02

(54) **GAUFRIER A DEBORDEMENT LIMITE**
WAFFELEISEN MIT BEGRENZTEM ÜBERLAUF
LIMITED OVERFLOW WAFFLE IRON

(30) Priorité: 10.11.2004 FR 0412002
(43) Date de publication de la demande: 25.07.2007
(73) Titulaire: SEB S.A., 69130 Ecully (FR)
(72) Inventeur: ROSSET, Roger, F-74150 Bloye (FR); PRIETO, Guillaume, F-74600 Seynod (FR); TRANCHANT, Jérome, F-74150 Rumilly (FR)
(74) Mandataire: Novagraaf Technologies
(86) Numéro de dépôt international: PCT/FR2005/002787
(87) Numéro de publication internationale: WO 2006/051215

(56) Documents cités:
- DE-A1- 3 821 494
- FR-A- 2 521 419
- GB-A- 634 863
- GB-A- 1 323 262
- US-A- 5 809 871
- US-A- 5 937 742

## Description

L'invention se rapporte à un gaufrier comprenant deux sous-ensembles de cuisson articulés entre eux.

On connaît un appareil électroménager du type comportant deux sous-ensembles de cuisson articulés entre eux entre une position ouverte et une position fermée rapprochée dans laquelle ils définissent une chambre de cuisson. Le document US 5 937 742 décrit un gaufrier suivant la préambule de la revendication indépendante.

Il s'avère que, lorsque l'aliment à cuire est du type tendant à gonfler sous l'action de la chaleur dégagée par les sous-ensembles de cuisson, comme c'est le cas d'une pâte à gaufre qui peut grossir considérablement (avec un coefficient de 2 à 3 selon les ingrédients utilisés), l'aliment tend à déborder hors des sous-ensembles de cuisson, ce qui salit l'appareil électroménager et le plan de travail sur lequel ce dernier est posé, et produit des gaufres ayant des bordures peu esthétiques. Aussi, l'utilisateur a tendance à réduire la quantité de pâte afin d'éviter tout débordement, ce qui donne, en général des gaufres avec une face presque sans relief.

Le problème posé est de réaliser un gaufrier du type précité qui soit simple et permette de réaliser des aliments à base de pâte (du type gaufres) sans que la pâte déborde hors de l'appareil.

Selon l'invention, dans le gaufrier du type précité, quelle que soit la position des deux sous-ensembles chauffants entre leur position fermée rapprochée et une position fermée écartée, un élément périphérique d'un sous-ensemble de cuisson coulisse le long d'un élément périphérique correspondant de l'autre sous-ensemble de cuisson de façon à former une chambre de cuisson à volume variable.

Ainsi, du fait que le sous-ensemble supérieur de cuisson puisse s'écarter du sous-ensemble inférieur de cuisson de façon à augmenter le volume de la chambre de cuisson, sous l'action de la pâte, celle-ci reste dans la chambre de cuisson et est intégré dans l'épaisseur de la gaufre.

D'autres particularités et avantages apparaîtront dans la description des modes de réalisation donnés à titre d'exemple non limitatif et illustrés par les dessins mis en annexe.
La figure 1 est une vue en coupe schématique d'un gaufrier conforme à un premier mode de réalisation qui ne fait pas partie de la invention.
La figure 2 est une vue en coupe schématique d'un gaufrier conforme à un second mode de réalisation qui ne fait pas partie de la invention,
La figure 3 est une vue en coupe schématique d'un gaufrier conforme à un troisième mode de réalisation de la présente invention,
La figure 4 est une vue en coupe partielle d'un gaufrier conforme au troisième mode de réalisation, de la pâte à gaufre ayant été déposée sur la plaque inférieure de cuisson, les deux sous-ensembles de cuisson étant dans leur position fermée rapprochée,
La figure 5 est une vue similaire à la figure 5, la pâte ayant gonflé jusqu'à remplir l'ensemble de la plaque supérieure de cuisson, les deux sous-ensembles de cuisson étant toujours en position fermée rapprochée,
La figure 6 est une vue similaire aux figures 5 et 6, la pâte ayant continué son expansion jusqu'à écarter les deux sous-ensembles de cuisson, sans qu'il y ait eu de débordement,
La figure 7 est un schéma illustrant un aspect particulier de la présente invention,
La figure 8 est une vue en perspective d'une plaque de cuisson du sous-ensemble supérieur de cuisson adaptée à un gaufrier conforme au troisième mode de réalisation,
La figure 9 est une vue schématique en coupe du fond d'une gorge de la plaque de cuisson du sous-ensemble supérieur de cuisson selon une variante de la présente invention, et
La figure 10 est une vue en coupe partielle illustrant la coopération des deux plaques de cuisson au niveau des nervures principales délimitant des gaufres différentes issues d'une même cuisson, selon un mode de réalisation particulier.

Un appareil électroménager 1 (en l'occurrence un gaufrier) comprend de façon classique un sous-ensemble supérieur de cuisson 2 et un sous-ensemble inférieur de cuisson 3 qui sont articulés entre eux par une charnière entre une position ouverte permettant le dépôt d'un aliment à cuire (en l'occurrence de la pâte) et le retrait de l'aliment cuit (en l'occurrence une gaufre), et une position fermée rapprochée dans laquelle les deux sous-ensembles de cuisson 2,3 se font face (le gaufrier 1 ne comportant pas de pâte à cuire) et définissent une chambre de cuisson 4.

Par ailleurs, chaque sous-ensemble de cuisson 2,3 comprend une coquille 5,6 qui forme le corps du sous-ensemble de cuisson 2,3, une plaque de cuisson 7,8 qui est adaptée à recevoir et à cuire la pâte, et une résistance électrique de chauffe 9 qui apporte à la plaque de cuisson 7,8 l'énergie thermique nécessaire pour la cuisson. De façon classique pour un gaufrier, chaque plaque de cuisson 7,8 comprend des dents 10 qui sont orientées en direction de l'autre plaque de cuisson 8,7 quand les deux sous-ensembles sont dans leur position fermée rapprochée, et des gorges 11 qui délimitent ces dents 10.

Chaque sous-ensemble de cuisson 2,3 comporte au moins un élément périphérique 13,15,21, 17,20,12,14,16,18. Quelle que soit la position des deux sous-ensembles de cuisson 2,3 entre leur position fermée rapprochée et une position fermée écartée (position dans laquelle les deux plaques de cuisson se font face et sont écartées l'une de l'autre sous l'action de l'expansion de la pâte), chaque élément périphérique 13,15,21,17,20 d'un sous-ensemble de cuisson coulisse le long d'un élément périphérique 12,14,16,18 correspondant de l'autre sous-ensemble de cuisson de façon à délimiter une chambre de cuisson à volume variable. Le sous-ensemble supérieur de cuisson 2 agit, entre les positions fermée rapprochée et fermée écartée, comme la tige d'un vérin, et est guidé par la coopération entre les éléments périphériques 13,15,21, 17,20,12,14,16,18 des deux sous-ensembles de cuisson 2,3. A cet effet, la charnière du gaufrier 1 permet un débattement vertical important des deux sous-ensembles de cuisson 2,3 entre les deux positions fermées.

Afin d'empêcher l'évacuation de la pâte hors de la chambre de cuisson 4 quelle que soit la position des deux sous-ensembles de cuisson 2,3 sont entre leur positions fermée rapprochée et fermée écartée, chaque élément périphérique 13,15,21,17,20, d'un sous-ensemble de cuisson s'étendent suffisamment en direction de l'élément périphérique 12,14,16,18,13 correspondant de l'autre sous-ensemble de cuisson pour se recouvrir quand les deux sous-ensembles de cuisson 2,3 sont dans cette position fermée écartée.

L'écart entre deux éléments périphériques 12,14,13,15, 21,16,17,20,18 correspondants peut être nul, l'un d'eux pouvant comporter un joint d'étanchéité. Cependant, en fonction du type de pâte (pâte pour beignet, pour gaufre...) ainsi que du revêtement déposé sur les plaques de cuisson, l'écart peut être plus ou moins important. De préférence, afin d'éviter que la pâte ne passe entre les éléments périphériques 12,14,13,15,21,16,17,20,18, il est au plus de 2 mm ou 3 mm, voire, de 5 mm, quand les deux sous-ensembles de cuisson 2,3 sont dans leur position fermée rapprochée.

Il est à noter que l'élévation du sous-ensemble supérieur de cuisson 2 se fait à partir d'un certain temps de cuisson, et que, de ce fait, quand les deux sous-ensembles de cuisson 2,3 sont dans leur position fermée écartée, la pâte n'a plus la même fluidité que lorsqu'ils sont dans leur position fermée rapprochée. Ainsi, l'écart maximum entre deux éléments périphériques 12,14,13,15,21, 16,17,20,18 correspondants, quand les deux sous-ensembles de cuisson sont dans leur position fermée écartée, peut, avec des caractéristiques différentes (moins contraignantes), empêcher l'évacuation de la pâte hors de la chambre de cuisson 4.

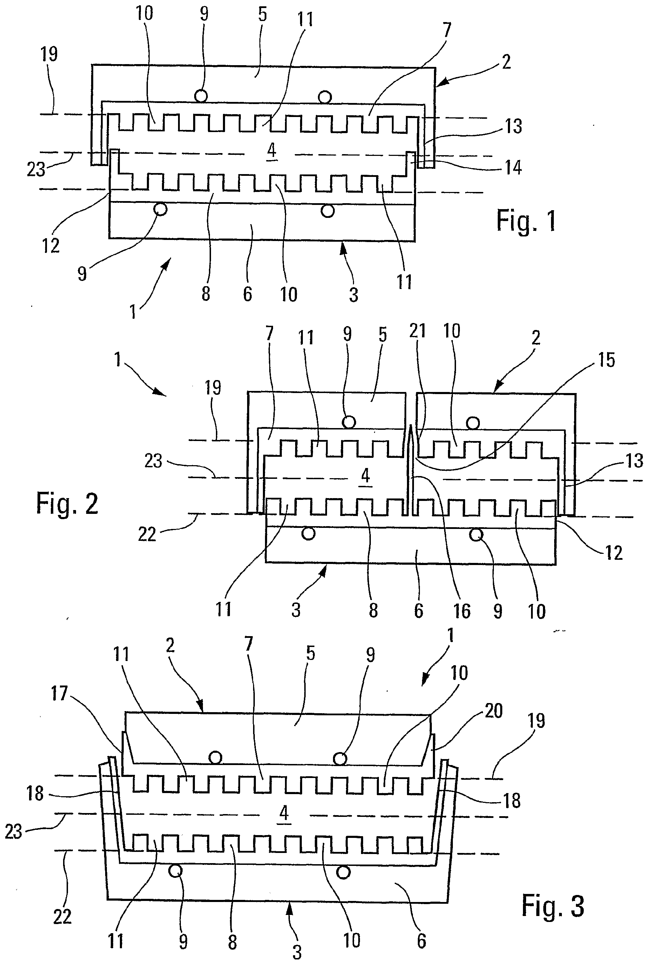

Dans les modes de réalisation illustrés aux figures 1 à 2, l'élément périphérique 12 du sous-ensemble inférieur de cuisson 3 est formé par la périphérie extérieure 12 de ce sous-ensemble, celui du sous-ensemble supérieur de cuisson 2 est formé par une paroi périphérique extérieure 13 qui s'étend en direction de la périphérie extérieure 12 du sous-ensemble inférieur de cuisson 3.

Dans le mode de réalisation illustré à la figure 1, la périphérie extérieure 12 du sous-ensemble inférieur de cuisson 3 est complétée par une paroi périphérique extérieure 14 qui s'étend depuis cette périphérie extérieur 12, dans la direction du sous-ensemble supérieur de cuisson 2.

Dans le mode de réalisation illustré à la figure 2, les sous-ensembles de cuisson 2,3 comprennent un deuxième élément périphérique 15,16 : pour le sous-ensemble supérieur de cuisson 2, ce deuxième élément de cuisson 15 est formé par une ouverture 15 réalisée dans la plaque supérieure de cuisson 7, et, pour le sous-ensemble inférieur de cuisson 3, il est formé par une paroi périphérique intérieure 16 qui s'étend en direction de l'ouverture 15. Les parois périphériques intérieures 16 portées par la plaque inférieure de cuisson 8 peuvent servir de rainure de séparation de gaufres dans le cas d'une plaque de cuisson 8 conformée de façon à servir de moule pour plusieurs gaufres. Les appareils pour beignets de forme torique peuvent également être construits selon le même principe. En outre, l'élément périphérique du sous-ensemble supérieur de cuisson 2 est complétée par une paroi périphérique intérieure 21 qui s'étend depuis l'ouverture 15, dans la direction opposée au sous-ensemble inférieur de cuisson 3.

Dans le mode de réalisation illustré à la figure 3, l'élément périphérique 17 du sous-ensemble supérieur de cuisson 2 est formé par la périphérie extérieure 17 de ce sous-ensemble, le sous-ensemble inférieur de cuisson 3 portant une paroi périphérique extérieure 18 qui forme l'élément périphérique correspondant et qui s'étend en direction de la périphérie extérieure 17 du sous-ensemble supérieur de cuisson 2, jusqu'au plan de fond 19 de la plaque supérieure de cuisson 3 (plan défini par le fond des gorges 11 de cette plaque).

En outre, dans ce mode de réalisation, l'élément périphérique du sous-ensemble supérieur de cuisson 2 est complétée par une paroi périphérique extérieure 20 qui s'étend depuis cette périphérie extérieure 17, dans, la direction opposé au sous-ensemble inférieur de cuisson 3. Les parois périphériques extérieures 20,18 des deux sous-ensembles de cuisson 2,3 coulissent ainsi le long l'une de l'autre.

Dans les modes de réalisation illustrés aux figures 1 à 3, la paroi périphérique (extérieure 13,20,14,18 et/ou intérieure 21,16) de chaque plaque de cuisson 2,3 fait un angle compris entre 90° et 135° avec le plan de fond 19,22 de la plaque de cuisson 7,8 correspondante, et de préférence entre 92° et 100° afin que l'écart entre cette paroi périphérique 13,14,16,18,20,21 et l'élément périphérique correspondant 12,14,13,15,21,17,20,18,16 reste à peu près constant quelle que soit la position des deux sous-ensembles de cuisson 2,3 entre leurs positions fermée rapprochée et fermée écartée. Un angle inférieur à 92° risque de générer un coincement entre les deux éléments périphériques 12,14,13,15,21,16,17,20,18 correspondants et donc de gêner le déplacement vers le haut de sous-ensemble supérieur de cuisson 2, et de contraindre la pâte à passer entre les deux éléments périphériques 12,14,13,15,21,16,17, 20,18. Un angle supérieur à 100° augmente de façon importante l'écartement entre les deux éléments périphériques 12,14,13,15,21,16,17,20,18 quand le sous-ensemble supérieur de cuisson 2 est déplacé vers le haut, ce qui peut favoriser le passage de la pâte.

Dans les modes de réalisation illustrés aux figures 1 à 3, chaque paroi périphérique 13,21,17,14,16,18 est monobloc avec la plaque de cuisson 7,8 correspondante. En outre, les parois périphériques 13,21,17,14,16,18 s'étendent sur toute la périphérie des sous-ensembles de cuisson 2,3.

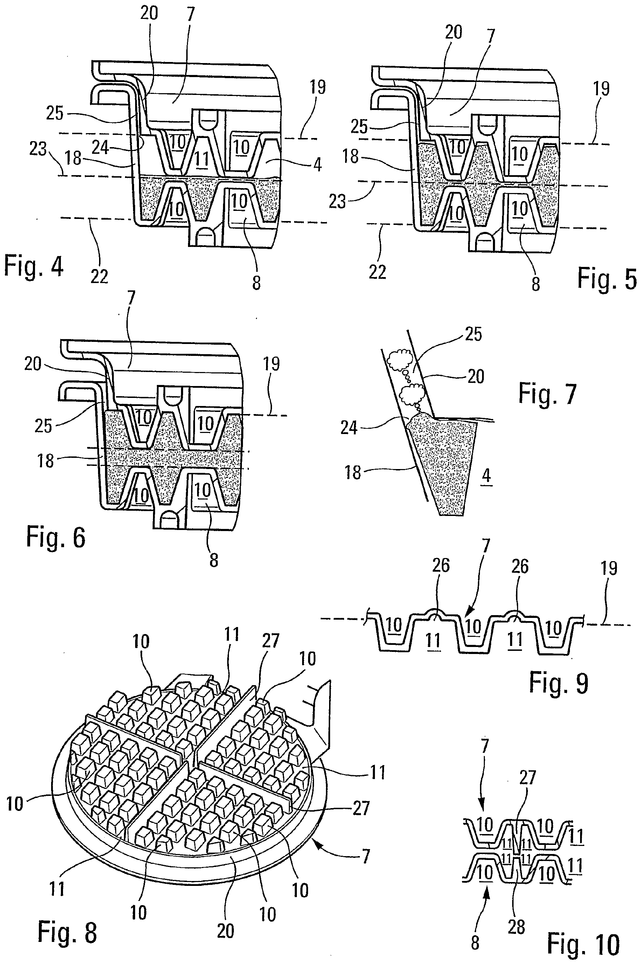

Les figures 4 à 6 illustrent le processus de cuisson d'une gaufre dans un gaufrier 1 conforme à la présente invention.

Après avoir déposé la pâte à gaufre sur la plaque inférieure de cuisson 8, le sous-ensemble supérieur de cuisson 2 est refermé sur la pâte, les deux sous-ensembles de cuisson 2,3 étant alors dans leur position fermée rapprochée (cf. figure 4).

Dès que les deux sous-ensembles de cuisson 2,3 sont dans leur position fermée rapprochée, la cuisson de la pâte provoque son expansion de façon à atteindre la plaque supérieure de cuisson 7 (cf. figure 5), les éléments périphériques 18,20 des sous-ensembles de cuisson 3,2 empêchant l'évacuation de la pâte hors de la chambre de cuisson 4.

Par la suite, du fait de son expansion, la pâte pousse le sous-ensemble supérieur de cuisson 2 vers le haut, jusque dans une position fermée écartée (cf. figure 6), les éléments périphériques 20,18 continuant d'empêcher l'évacuation de la pâte hors de la chambre de cuisson 4. Comme on peut le voir à la figure 6, la paroi périphérique extérieure 18 du sous-ensemble inférieur de cuisson 3 s'étend légèrement au-delà du plan de fond 19 de la plaque supérieure de cuisson 7 quand les deux sous-ensembles de cuisson 2,3 sont dans cette position fermée écartée.

comme on peut le voir à la figure 4, la paroi périphérique extérieure 20 du sous-ensemble supérieur de cuisson 3 s'étend jusqu'à atteindre l'extrémité de la paroi périphérique 18 correspondante du sous-ensemble inférieur de cuisson 3 quand les deux sous-ensembles de cuisson 2,3 sont en position fermée rapprochée.

Ainsi, selon la présente invention, tout le surplus de pâte est intégré dans l'épaisseur de la gaufre et n'est plus éjecté hors de la chambre de cuisson 4. Ce surplus de pâte pouvant être intégré peut être relativement important, la limite étant l'amplitude de positions du sous-ensemble supérieur de cuisson 2 en position fermée. Il est ainsi possible de réaliser des recettes originales de gaufres, comme, par exemple, des gaufres fourrées réalisées en déposant une première couche de pâte sur la plaque inférieure de cuisson 8, un couche de fourrage sur la première couche de pâte, et une seconde couche de pâte sur la couche de fourrage.

L'amplitude de mouvement du sous-ensemble supérieur de cuisson 2 peut être important : quelques millimètres (2 ou 5 mm), pouvant aller jusqu' à 10 ou 15 mm, voire 20 ou même 30 mm, ou plus. La limite étant principalement l'intérêt d'obtenir une gaufre (ou tout autre aliment de ce type) atteignant de telles épaisseurs.

De préférence, de façon à éviter un excès de pâte qui entraînerait inévitablement un débordement (l'amplitude de positions du sous-ensemble supérieur de cuisson 2 étant forcément limitée pour un gaufrier donné) ou un défaut de pâte, le sous-ensemble inférieur de cuisson 3 comprend un indicateur de niveau optimal de pâte à gaufre. Un tel indicateur peut être une marche, une dent ayant une hauteur spécifique, ou une sérigraphie réalisée, par exemple, sur la paroi périphérique extérieure 18 du sous-ensemble inférieur de cuisson 3.

Dans les modes de réalisation où la paroi périphérique extérieure 18 du sous-ensemble inférieur de cuisson 3 s'étend bien au delà du plan médian 23 de la chambre de cuisson 4 (défini comme étant le plan équidistant aux deux plaques de cuisson 7,8 de l'appareil électroménager 1 en position fermée rapprochée, et plus précisément, dans le cas d'un gaufrier, le plan équidistant aux deux plans de fond 19,22 des plaques de cuisson 7,8), voire au delà du plan de fond 19 du sous-ensemble supérieur de cuisson 2, sur toute la périphérie du sous-ensemble inférieur de cuisson 3, l'extraction de la gaufre peut s'avérer particulièrement délicat.

Afin de faciliter cette extraction, plusieurs systèmes sont possibles :
- la plaque inférieure de cuisson 8 peut être séparable du sous-ensemble inférieur de cuisson 3 et de la paroi périphérique extérieure 18 (éventuellement de la paroi périphérique intérieure 16), et comprendre un organe de préhension facilitant sa manipulation.
- le sous-ensemble inférieur de cuisson 3 peut comprendre un levier mobile entre une position de repos dans laquelle il repose sur la plaque inférieure de cuisson 8, et une position activée dans laquelle il fait saillie vers le haut, entraînant la gaufre avec lui.
- les deux plaques de cuisson 7,8 peuvent avoir un revêtement anti-adhésif, le pouvoir adhésif de celui déposé sur la plaque supérieure de cuisson 7 étant plus important que celui déposé sur la plaque inférieure de cuisson 8, la gaufre ayant ainsi tendance à rester accrochée à la plaque supérieure de cuisson 7 d'où elle peut facilement être extraite.
- chaque plaque de cuisson 7,8 peut avoir des dents 10 ayant des formes qui lui sont propres, celles 10 de la plaque supérieure de cuisson 7 pouvant être conformées de façon à favoriser l'accroche de la gaufre alors que celles 10 de la plaque inférieure de cuisson 8 peuvent être conformées de façon à favoriser son détachement.

Il serait aussi possible que la paroi périphérique extérieure 18 du sous-ensemble inférieur de cuisson 3 comprenne, de façon à définir un accès au flanc de la gaufre, une partie principale qui, sur environ 300° (voire plus), s'étende au-delà du plan médian 23 du gaufrier 1 (voire au delà du plan de fond 19 du sous-ensemble supérieur de cuisson 2 quand les deux sous-ensembles de cuisson 2,3 sont dans leur position fermée écartée), et une partie complémentaire qui s'étende de préférence uniquement jusqu'au plan médian 23, sur environ 60° (voire moins), la partie complémentaire de la paroi périphérique extérieure 18 du sous-ensemble inférieur 3 pouvant comprendre un joint d'étanchéité coopérant avec la partie correspondante d'une paroi périphérique extérieure du sous-ensemble supérieur de cuisson orientée en direction du sous-ensemble inférieur de cuisson 3, de façon à ne pas créer de passage par lequel la pâte pourrait s'échapper.

Selon un mode de réalisation particulier (illustré aux figures 4 à 7) de la présente invention, l'écart entre les éléments périphériques 18,20 des deux sous-ensembles de cuisson 3,2, quand ils sont dans leur position fermée rapprochée, forme un orifice 24 d'une conduite d'évacuation 25 de la vapeur générée par la cuisson de la pâte. Afin d'avoir une très bonne évacuation de la vapeur, il est préférable que cet écart soit au moins de 0,5 mm. Quand les deux sous-ensembles de cuisson 2,3 sont dans leur position fermée rapprochée, ils ne se touchent que ponctuellement sur la périphérie des plaques de cuisson 7,8, de façon à définir l'écart entre les éléments périphériques 20,18 correspondants. De préférence, l'orifice 24 est spécifique à la vapeur et a une section de passage trop étroite pour que la pâte soit entraînée hors de l'appareil.

De préférence, l'orifice 24 formé par l'écart entre les éléments périphériques débouche au-dessus du plan médian 23 de la chambre de cuisson 4 quand les deux sous-ensembles de cuisson 2,3 sont dans leur position fermée rapprochée. Du fait que la vapeur a toujours tendance à s'accumuler au sommet de la chambre de cuisson 4, il est préférable que cet orifice 24 débouche à un niveau plus proche du plan de fond 19 de la plaque supérieure de cuisson 7 que du plan médian 23, voire, comme illustré aux figures 4 et 5, au niveau de ce plan de fond 19. Ainsi, la vapeur d'eau qui tend naturellement à s'accumuler à la partie haute de la chambre de cuisson 4 (dans le cas d'un gaufrier, dans les gorges 11 de la plaque supérieure de cuisson 7), s'échappe facilement hors de l'appareil 1 en passant par la conduite d'évacuation 25. De cette façon, la pâte peut occuper tout le volume de la chambre de cuisson 4. Cette particularité permet d'avoir des gaufres ayant un très bon aspect, ses deux faces étant parfaitement formées.

Dans le mode de réalisation illustré à la figure 2, l'ouverture 15 réalisée dans la plaquée supérieure de cuisson 7 forme la délimitation extérieure de l'orifice spécifique à la vapeur, alors que la paroi périphérique intérieure 16 du sous-ensemble inférieur de cuisson 3 forme sa délimitation intérieure. Dans le mode de réalisation illustré à la figure 3, la périphérie extérieure 20 du sous-ensemble supérieur de cuisson 2 forme la délimitation intérieure de l'orifice spécifique à la vapeur, alors que la paroi périphérique extérieure 18 du sous-ensemble inférieur de cuisson 3 forme sa délimitation extérieure.

De préférence, les éléments périphériques des deux sous-ensembles de cuisson 2,3 sont conformés de façon à délimiter un orifice 24 d'une conduite d'évacuation 25 spécifique à la vapeur, quelle que soit la position des deux sous-ensembles de cuisson 2,3 entre leur position fermée rapprochée et fermée écartée.

Afin de faciliter l'évacuation de la vapeur, comme on peut le voir aux figures 4 à 6, les dents 10 de la plaque supérieure de cuisson 7 du gaufrier 1 débouchent intégralement, en hauteur, dans l'orifice 24 de la conduite d'échappement 25. Comme on peut le voir à la figure 8, une telle plaque supérieure de cuisson 7, adaptée à un gaufrier 1 où l'orifice 24 se situe au niveau du plan de fond 19 de cette plaque 7, ne comporte pas de paroi périphérique qui s'étend depuis le plan de fond 19, en direction de la plaque inférieure de cuisson.

De plus, toujours pour faciliter l'évacuation de la vapeur, la figure 9 illustre une variante dans laquelle la plaque supérieure de cuisson 7 comprend des canaux d'évacuation de vapeur 26 qui s'étendent le long des gorges 11, au fond de celles-ci (au niveau du plan de fond 19). Ces canaux 26 permettent une meilleure circulation de la vapeur. De préférence, afin que ces canaux 26 ne soient empruntés que par la vapeur, leur section de passage possède les mêmes caractéristiques que celles de la section de passage de l'orifice 24 de la conduite d'évacuation 25 (section inférieure à 2 mm, voire à 3 mm, et supérieure à 0,5 mm). Egalement de préférence, ces canaux 26 débouchent dans ces orifices 24.

Par ailleurs, afin de faciliter le bon remplissage de la plaque supérieure de cuisson 7 pendant l'étape de cuisson, il est particulièrement recommandé de répartir régulièrement la pâte sur la plaque inférieure de cuisson 8. En effet, si une zone de la plaque inférieure de cuisson 8 est peu recouverte de pâte par rapport au reste de la plaque, la pâte située sur cette zone est plus éloignée de la plaque supérieure de cuisson 7 que le reste de la pâte. Cette pâte est donc moins chauffée. Du fait de l'expansion du reste de la pâte qui est en contact avec la plaque supérieure de cuisson 7 et qui la pousse vers le haut, la portion de pâte en retard n'arrive pas à atteindre la plaque supérieure de cuisson 7, reçoit donc moins de chaleur, et ne peut pas rattraper son retard. De même, il est préférable que chaque sous-ensemble de cuisson 2,3 comprenne un dispositif de chauffe adapté à répartir l'énergie thermique sur une grande partie de la surface de la plaque de cuisson 7,8 correspondante. En effet, plus la chaleur est uniformément répartie, moins il y a de zones anormalement chaudes ou froides, plus l'expansion de la pâte est uniforme.

Dans le cas de gaufrier dans lequel les deux plaques de cuisson 7,8 sont gravées de façon à cuire plusieurs gaufres en même temps, les plaques de cuisson 7,8 comprennent des nervures principales 27,28 distinctes des dents 10. Afin d'améliorer la répartition homogène de la pâte sur le plaque inférieure de cuisson, les nervures principales 27,28 peuvent être beaucoup moins épaisses que les dents, leur épaisseur est de préférence, au maximum la moitié, voire le tiers ou le quart, de celle d'une dent 10.

Dans le mode de réalisation illustré à la figure 10, les nervures principales 28 de la plaque inférieure de cuisson 8 sont moins hautes que les dents 10 correspondantes, alors que les nervures principales 27 de la plaque supérieure de cuisson 7 dépassent le plan médian 23 quand les deux sous-ensembles de cuisson 2,3 sont dans leur position fermée rapprochée.

De préférence, afin que la pâte de cuisson ne soit pas véritablement divisée par les nervures principales 27,28, quand les deux sous-ensembles de cuisson 2,3 sont dans leur position fermée rapprochée, les nervures principales supérieures 27 ne sont pas en contact avec les nervures principales inférieures 28.

## Revendications

1. Gaufrier (1) comprenant deux sous-ensembles de cuisson, l'un supérieur (2), l'autre inférieur (3), articulés entre eux entre une position ouverte et une position fermée rapprochée dans laquelle ils définissent une chambre de cuisson (4), le sous-ensemble inférieur de cuisson portant une paroi périphérique extérieure (18) qui s'étend en direction du sous-ensemble supérieur de cuisson en position fermée rapprochée et qui délimite latéralement la chambre de cuisson, le sous-ensemble supérieur de cuisson (2) comprenant une plaque supérieur de cuisson (7) présentant un plan de fond (19), une paroi périphérique extérieure (20) qui s'étend dans la direction opposée au sous-ensemble inférieur de cuisson (3) et qui est montée coulissante le long de cette paroi (18) quelle que soit la position des deux sous-ensembles de cuisson entre leur position fermée rapprochée et une position fermée écartée du fait de l'expansion de la pâte, de façon que la chambre de cuisson (4) soit à volume variable, **caractérisé en ce que** ladite paroi périphérique extérieure (18) s'étend au-delà du plan de fond (19), en position fermée écartée.

2. Gaufrier (1) selon la revendication 1, **caractérisé en ce que** l'amplitude de mouvement du sous-ensemble supérieur de cuisson (2) entre la position fermée rapprochée et la position fermée écartée est au moins de 2 mm, de préférence 10 mm, voire 20 mm.

3. Gaufrier (1) selon l'une des revendications 1 ou 2, **caractérisé en ce que** l'écart entre les parois périphériques extérieures (18, 20) quand les sous-ensembles de cuisson sont dans leur position fermée rapprochée est au plus égale à 5 mm, de préférence à 3 mm, voire 2 mm.

4. Gaufrier (1) selon l'une des revendications 1 à 3, **caractérisé en ce que** chaque paroi périphérique extérieure (18, 20) fait, avec la plaque de cuisson (7,8) portée par le sous-ensemble de cuisson correspondant, un angle compris entre 90 et 135°, de préférence, entre 92 et 100°.

5. Gaufrier (1) selon l'une des revendications 1 à 4, **caractérisé en ce que** la plaque de cuisson (8) portée par le sous-ensemble inférieur de cuisson (3) comprend un organe de préhension et est séparable de la paroi périphérique externe (18) de ce sous-ensemble de cuisson.

6. Gaufrier (1) selon l'une des revendications 1 à 4, **caractérisé en ce que** chaque paroi périphérique extérieure (18, 20) est monobloc avec la plaque de cuisson (7, 8) correspondante.

7. Gaufrier (1) selon l'une des revendications 1 à 6, **caractérisé en ce que** chaque paroi périphérique extérieure (18, 20) s'étend sur toute la périphérie du sous-ensemble de cuisson correspondant.

8. Gaufrier (1) selon l'une des revendications 1 à 7, **caractérisé en ce que**, quand les deux sous-ensembles de cuisson (2, 3) sont en position fermée rapprochée, l'écart entre les deux parois périphériques externes (18, 20) forme une conduite d'évacuation (25) de la vapeur générée par la cuisson de la pâte.

9. Gaufrier (1) selon l'une des revendications 1 à 8, **caractérisé en ce que** l'écart entre les parois périphériques extérieures (18, 20) quand les sous-ensembles de cuisson sont dans leur position fermée rapprochée est au moins égale à 0,5 mm.

10. Gaufrier (1) selon l'une des revendications 1 à 9, **caractérisé en ce que** le pouvoir adhésif du revêtement antiadhésif recouvrant la plaque de cuisson portée par le sous-ensemble supérieur de cuisson est plus important que celui du revêtement antiadhésif recouvrant la plaque de cuisson portée par le sous-ensemble inférieur de cuisson.

11. Gaufrier (1) selon l'une des revendications 1 à 10, **caractérisé en ce que** la forme des dents de la plaque de cuisson portée par le sous-ensemble supérieur de cuisson favorise plus l'accroche de la gaufre que ne le fait la forme des dents de la plaque de cuisson portée par le sous-ensemble inférieur de cuisson.

## Patentansprüche

1. Waffeleisen (1), das zwei Garunterbaugruppen umfasst, eine obere (2) und eine untere (3), die miteinander zwischen einer offenen Position und einer angenäherten geschlossenen Position, in der sie eine Garkammer (4) definieren, angelenkt sind, wobei die untere Garunterbaugruppe eine umfängliche Außenwand (18) trägt, die sich in Richtung der oberen Garunterbaugruppe in angenäherter geschlossener Position erstreckt und seitlich die Garkammer abgrenzt, wobei die obere Garunterbaugruppe (2) eine obere Garplatte (7) umfasst, die eine Bodenebene (19), eine umfängliche Außenwand (20) aufweist, die sich in die zu der unteren Garunterbaugruppen (3) entgegengesetzte Richtung erstreckt und entlang dieser Wand (18) ungeachtet der Position der zwei Garunterbaugruppen zwischen ihrer angenäherten geschlossenen Position und einer aufgrund der Ausdehnung des Teigs abgespreizten geschlossenen Position derart gleitend montiert ist, dass die Garkammer (4) variables Volumen hat, **dadurch gekennzeichnet, dass** sich die umfängliche Außenwand (18) über die Bodenebene (19) in abgespreizter geschlossener Position hinaus erstreckt.

2. Waffeleisen (1) nach Anspruch 1, **dadurch gekennzeichnet, dass** die Bewegungsamplitude der oberen Garunterbaugruppe (2) zwischen der angenäherten geschlossenen Position und der abgespreizten geschlossenen Position mindestens 2 mm, bevorzugt 10 mm, ja sogar 20 mm beträgt.

3. Waffeleisen (1) nach einem der Ansprüche 1 oder 2, **dadurch gekennzeichnet, dass** der Abstand zwischen den umfänglichen Außenwänden (18, 20), wenn die Garunterbaugruppen in ihrer angenäherten geschlossenen Position sind, höchstens gleich 5 mm, bevorzugt gleich 3 mm, ja sogar 2 mm ist.

4. Waffeleisen (1) nach einem der Ansprüche 1 bis 3, **dadurch gekennzeichnet, dass** jede umfängliche Außenwand (18, 20) mit der Garplatte (7, 8), die von der entsprechenden Garunterbaugruppe getragen wird, einen Winkel bildet, der zwischen 90 und 135°, bevorzugt zwischen 92 und 100° liegt.

5. Waffeleisen (1) nach einem der Ansprüche 1 bis 4, **dadurch gekennzeichnet, dass** die Garplatte (8), die von der unteren Garunterbaugruppe (3) getragen wird, ein Greifelement umfasst und von der umfänglichen Außenwand (18) dieser Garunterbaugruppe getrennt werden kann.

6. Waffeleisen (1) nach einem der Ansprüche 1 bis 4, **dadurch gekennzeichnet, dass** jede umfängliche Außenwand (18, 20) mit der entsprechenden Garplatte (7, 8) einstückig ist.

7. Waffeleisen (1) nach einem der Ansprüche 1 bis 6, **dadurch gekennzeichnet, dass** sich jede umfängliche Außenwand (18, 20) auf dem gesamten Umfang der entsprechenden Garunterbaugruppe erstreckt.

8. Waffeleisen (1) nach einem der Ansprüche 1 bis 7, **dadurch gekennzeichnet, dass**, wenn die zwei Garunterbaugruppen (2, 3) in angenäherter geschlossener Position sind, der Abstand zwischen den zwei umfänglichen Außenwänden (18, 20) eine Rohrleitung (25) zum Ableiten des Dampfs, der von dem Garen des Teigs erzeugt wird, bildet.

9. Waffeleisen (1) nach einem der Ansprüche 1 bis 8, **dadurch gekennzeichnet, dass** der Abstand zwischen den umfänglichen Außenwänden (18, 20), wenn die Garunterbaugruppen in ihrer angenäherten geschlossenen Position sind, mindestens 0,5 mm beträgt.

10. Waffeleisen (1) nach einem der Ansprüche 1 bis 9, **dadurch gekennzeichnet, dass** die Haftkraft der Antihaftbeschichtung, die die Garplatte, die von der oberen Garunterbaugruppe getragen wird, abdeckt, stärker ist als die der Antihaftbeschichtung, die die Garplatte, die von der unteren Garunterbaugruppe getragen wird, abdeckt.

11. Waffeleisen (1) nach einem der Ansprüche 1 bis 10, **dadurch gekennzeichnet, dass** die Form der Zähne der Garplatte, die von der oberen Garunterbaugruppe getragen wird, das Haften der Waffel mehr fördert als die Form der Zähne der Garunterbaugruppe, die von der unteren Garunterbaugruppe getragen wird.

## Claims

1. A waffle maker (1) comprising two cooking sub-assemblies, one upper (2) and the other lower (3), articulated together between an open position and a close-together closed position in which said sub-assemblies define a cooking chamber (4), the lower cooking sub-assembly having an outer peripheral wall (18) that extends in the direction of the upper cooking subassembly in the close-together closed position and that defines the cooking chamber laterally, the upper cooking sub-assembly (2) comprising an upper cooking plate (7) having a back plane (19), an outer peripheral wall (20) that extends in the opposite direction to the lower cooking sub-assembly (3) and that is mounted in such a way as to slide along this wall (18), regardless of the position of the two cooking sub-assemblies between the close-together closed position of said sub-assemblies and a distant closed position because of the expansion of the dough, in such a way that the cooking chamber (4) has a variable volume, **characterised in that** said outer peripheral wall (18) extends beyond the back wall (19) in the distant closed position.

2. Waffle maker (1) according to claim 1, **characterised in that** the amplitude of movement of the upper cooking sub-assembly (2) between the close-together closed position and the distant closed position is at least 2mm, preferably 10mm or even 20mm.

3. Waffle maker (1) according to one of claims 1 and 2, **characterised in that** the distance between the outer peripheral walls (18, 20) when the cooking sub-assemblies are in the close-together closed position is at most equal to 5mm, preferably 3mm or even 2mm.

4. Waffle maker (1) according to one of claims 1 to 3, **characterised in that** each outer peripheral wall (18, 20) makes, with the cooking plate (7, 8) carried by the corresponding cooking sub-assembly, an angle between 90 and 135°, preferably between 92 and 100°.

5. Waffle maker (1) according to one of claims 1 to 4, **characterised in that** the cooking plate (8) carried by the lower cooking sub-assembly (3) comprises a gripping member and can be separated from the outer peripheral wall (18) of this cooking sub-assembly.

6. Waffle maker (1) according to one of claims 1 to 4, **characterised in that** each outer peripheral wall (18, 20) is made from a single piece with the corresponding cooking plate (7, 8).

7. Waffle maker (1) according to one of claims 1 to 6, **characterised in that** each outer peripheral wall (18, 20) extends around the entire periphery of the corresponding cooking sub-assembly.

8. Waffle maker (1) according to one of claims 1 to 7, **characterised in that** when the two cooking sub-assemblies (2, 3) are in the close-together closed position, the distance between the two outer peripheral walls (18, 20) forms a duct (25) for the evacuation of the steam generated by the cooking of the dough.

9. Waffle maker (1) according to one of claims 1 to 8, **characterised in that** the distance between the outer peripheral walls (18, 20) when the cooking sub-assemblies are in the close-together closed position is at least equal to 0.5mm.

10. Waffle maker (1) according to one of claims 1 to 9, **characterised in that** the adhesive power of the non-stick coating covering the cooking plate carried by the upper cooking sub-assembly is greater than the adhesive power of the non-stick coating covering the cooking plate carried by the lower cooking sub-assembly.

11. Waffle maker (1) according to one of claims 1 to 10, **characterised in that** the shape of the teeth of the cooking plate carried by the upper cooking sub-assembly facilitates the sticking of the waffle more than the shape of the teeth of the cooking plate carried by the lower cooking sub-assembly.
